# EUROPÄISCHE PATENTANMELDUNG

(11) **EP 3 940 616 A1**
(43) Veröffentlichungstag der Anmeldung: **19.01.2022**
(21) Anmeldenummer: 20020327.1
(22) Anmeldetag: 17.07.2020
(51) Int. Cl.: G06Q 30/02

(54) **VERKAUFSFLÄCHE MIT VIRTUELLEM ASSISTENTEN**

(71) Anmelder: Storch-Ciret Holding GmbH, 42107 Wuppertal (DE)
(72) Erfinder: Cernisovs, Rolands, LV-1012 Riga (LV)
(74) Vertreter: Kayser, Christoph

(57) **Zusammenfassung**

Eine Verkaufsfläche mit einer Mehrzahl von Präsentationseinrichtungen zum Präsentieren eines ersten und wenigstens eines zweiten technischen Produkten, mit einem Wegeleitsystem zur Steuerung von kaufinteressierten Personen zu einer der Präsentationseinrichtungen, mit einem Informationssystem, das den kaufinteressierten Personen eine erste Information zu wenigstens einem in einer ersten Präsentationseinrichtung präsentierten ersten technischen Produkt liefert, wobei das Informationssystem wenigstens eine digitale Informationseinheit mit einem virtuellen Assistenten umfasst, der eine Schnittstelle zur Eingabe eines Kennzeichens des ersten technischen Produkts und eine Anzeigeeinrichtung zum Anzeigen einer text- und/oder bildbasierten Information aufweist, und mit einer Steuereinrichtung zum Steuern des Informationssystems, ist dadurch gekennzeichnet, dass der virtuelle Assistent mittels der Steuereinrichtung auf eine Datenbank zugreifen kann, in der die erste Information in Form eines ersten digitalen Datensatzes und wenigstens eine einem zweiten technischen Produkt zugeordnete und von der ersten Information unterschiedliche zweite Information in Form eines zweiten digitalen Datensatzes gespeichert sind, wobei der erste digitale Datensätze mit dem wenigstens einen zweiten digitalen Datensatz verknüpft ist und die Steuereinrichtung in Abhängigkeit von der an der Schnittstelle (eingelesenen ersten Information die wenigstens eine zweite Information an der Anzeigeeinrichtung anzeigt.

## Beschreibung

Die vorliegende Erfindung betrifft Verkaufsfläche mit einer Mehrzahl von Präsentationseinrichtungen zum Präsentieren von technischen Produkten, mit einem Wegeleitsystem zur Steuerung einer kaufinteressierten Person zu einer der Präsentationseinrichtungen, mit einem Informationssystem, das der kaufinteressierten Person eine erste Information zu wenigstens einem in den Präsentationseinrichtungen präsentierten ersten Produkt liefert, wobei das Informationssystem wenigstens eine digitale Informationseinheit mit einem virtuellen Assistenten (VA) umfasst, der eine Schnittstelle zur Eingabe eines Kennzeichens und eine Anzeigeeinrichtung zum Anzeigen einer text-und/oder bildbasierten Information aufweist, und mit einer Steuereinrichtung zum Steuern des Informationssystems.

Im Folgenden wird der Begriff "kaufinteressierte Person" genderneutral als Synonym für "Kunde" und "Kundin" verwendet. Der Begriff "beratende Person" wird genderneutral als Synonym für "Verkäufer" und "Verkäuferin" verwendet. Im Folgenden ist mit "bestimmtem technischen Produkt" der "bestimmten technischen Produktgruppe" ein technisches Produkt bzw. Produktgruppe gemeint, die von einer kaufinteressierten Person als primäres Zielobjekt auf einer Verkaufsfläche ausgewählt ist.

Solche Verkaufsflächen sind aus dem Stand der Technik allgemein bekannt. So gibt es z. B. Großmärkte, Supermärkte und auch Baumärkte mit Präsentationseinrichtungen, die z. B. jeweils ein Regal, ein Display oder ein Gebinde, wie eine Palette, eine Umverpackung o.dgl. sein können, in denen einer kaufinteressierten Person technische Produkte präsentiert werden. Zudem gibt es auf solchen Verkaufsflächen häufig auch ein Wegeleitsystem, das eine kaufinteressierte Person dabei unterstützt, sich zielgerichtet durch die Infrastruktur einer Verkaufsfläche zu bewegen und eine Präsentationseinrichtung zu finden, in der das von der kaufinteressierten Person bestimmte technische Produkt oder die von dieser bestimmte technische Produktgruppe präsentiert wird. Mithilfe des Wegeleitsystems kann sich die kaufinteressierte Person in dem Markt orientieren. Solche Wegeleitsysteme können die kaufinteressierte Person analog und/oder digital unterstützen, um auf direktem oder auch indirektem Weg zu dem von ihr gesuchten technischen Produkt oder der technischen Produktgruppe zu gelangen.

Auf einigen Verkaufsflächen erhält die kaufinteressierte Person an der von ihr mit Hilfe des Wegeleitsystems gefundenen Präsentationseinrichtung des bestimmten technischen Produkts oder der Produktgruppe mehr Detailinformation zu dem technischen Produkt oder der Produktgruppe. Das ist z. B. dann der Fall, wenn das technische Produkt ein Produkt ist, das mit unterschiedlichen Eigenschaften für unterschiedliche Anwendungen angeboten wird. Zu diesem Zweck sind an den Präsentationseinrichtungen üblicherweise bedruckte Schilder mit Detailinformationen angebracht. In einigen Fällen, wie z. B. in Baumärkten, gibt es auf der Verkaufsfläche an einzelnen Präsentationseinrichtungen auch Monitore, auf denen optische und akustische Informationen zu dem bestimmten technischen Produkt oder der technischen Produktgruppe wiedergegeben werden. Alternativ oder ergänzend gibt es an einzelnen Präsentationseinrichtungen auch 2D-Codes, wie z. B. einen QR-Code, der mit einem mobilen Endgerät der kaufinteressierten Person gescannt werden kann, so dass dann auf dem mobilen Endgerät der kaufinteressierten Person eine Verbindung zu einer Informationsquelle hergestellt wird, die der kaufinteressierten Person Detailinformation zu dem von ihr bestimmten technischen Produkt oder der Produktgruppe liefert.

Es gibt aber Fälle, in denen die kaufinteressierte Person auf einer Verkaufsfläche nicht nur ein einzelnes, bestimmtes technisches Produkt aus einer bestimmten Produktgruppe sucht, diese in einer Präsentationseinrichtung findet und sich zu dieser an der Präsentationseinrichtung im Detail informieren will, um diese dann u.U. auch aufgrund dieser Detailinformation zu erwerben.

Wenn nämlich ein erstes von der kaufinteressierten Person bestimmtes, technisches Produkt aufgrund einer besonderen Eigenschaft in Verbindung mit wenigstens eines zweiten von der kaufinteressierten Person nicht bestimmten und ggf. dieser sogar unbekannten technischen Produkts in einem technischen Zusammenhang steht, z. B.. um das erste technische Produkt zu verarbeiten, zu bearbeiten oder mit dem ersten technischen Produkt zusammenwirken zu lassen, dann hilft den kaufinteressierten Personen das bisher bekannte Informationssystem nicht weiter. Die kaufinteressierte Person erfährt viel über das erste technische Produkt, aber nichts über das für seine individuelle Nutzung dieses technischen Produkts erforderliche, wenigstens eine zweite technische Produkt. Die kaufinteressierte Person geht mit ihrem soeben erlangten Detailwissen über das erste von ihr bestimmte technische Produkt, dann üblicherweise zu einer sich gerade zufällig in der Nähe befindenden, beratenden Person. Es kann der kaufinteressierten Personen passieren, dass diese beratende Person für die von ihr gestellte Frage zu einem zweiten technischen Produkt nicht zuständig ist und die kaufinteressiere Person an eine weitere beratende Person oder an einen Informationsstand verweist, z. B.. im Baumarkt. Häufig stehen dort bereits mehrere kaufinteressierte Personen, um sich beraten zu lassen.

Es vergeht also viel Zeit, wenn die kaufinteressierte Person ein komplexes Kaufinteresse hat, das mehrere aufgrund ihrer technischen Eigenschaften in Abhängigkeit voneinander stehende technische Produkte umfasst. Ein solcher Fall tritt nicht nur in Baumärkten häufig auf, in denen regelmäßig unterschiedliche Materialien mit unterschiedlichen anderen Materialien verarbeitet oder bearbeitet werden dürfen und der Rat eines Fachmanns hinsichtlich einer für die spezielle Anwendung günstige Kombination gebraucht wird. Konkret geht es z. B. darum, welche Farbe auf welchem Untergrund aufgebracht werden kann, ob ein Voranstrich notwendig ist oder nicht oder welches Werkzeug für die Verarbeitung geeignet ist. Eine ähnliche Fragestellung ergibt sich auch bei der Verarbeitung von Bodenbelägen und die Verwendung von Klebstoffen, etc. Auch die richtige Werkzeugwahl gehört in diesen Themenbereich.

Der Nachteil des Standes der Technik besteht nun darin, dass das vorhandene Informationssystem eine kaufinteressierte Person ausgehend von einer Präsentationseinrichtung mit einem ersten technischen Produkt nicht über wenigstens ein zum ersten technischen Produkt unterschiedliches, zweites technisches Produkt informiert, so dass die kaufinteressierte Person mithilfe des Wegeleitsystems auf der Verkaufsfläche dieses zweite technische Produkt finden und kaufen kann. Stattdessen irrt die kaufinteressierte Person mit dem ersten technischen Produkt über die Verkaufsfläche und sucht Rat bei einer beratenden Person. Das ist sehr zeitaufwändig. Es kann besonders nachteilig sein, wenn dadurch unnötige und unerwünschte Personenkontakte ermöglicht werden.

Die Aufgabe der vorliegenden Erfindung ist daher, eine Verkaufsfläche der eingangs genannten Art derart weiterzubilden, dass eine kaufinteressierte Person weniger Wege auf einer Verkaufsfläche zurücklegen muss, um die für sie wichtigen Informationen zu erhalten.

Die Aufgabe wird dadurch gelöst, dass der virtuelle Assistent (VA) mittels der Steuereinrichtung auf eine Datenbank zugreifen kann, in der die erste Information in Form eines ersten digitalen Datensatzes und wenigstens eine einem zweiten technischen Produkt zugeordnete und von der ersten Information unterschiedliche zweite Information in Form eines zweiten digitalen Datensatzes gespeichert sind, wobei der erste digitale Datensatze mit dem wenigstens einen zweiten digitalen Datensatz verknüpft ist und die Steuereinrichtung in Abhängigkeit von der an der Schnittstelle eingegebenen Kennzeichen bzw. ersten Information die zweite Information an der Anzeigeeinrichtung anzeigt.

Mit der vorliegenden Erfindung ist es möglich, der kaufinteressierten Person an der Anzeigeeinrichtung neben der ersten Information zu dem von ihr in der Präsentationseinrichtung gewählten ersten technischen Produkt auch gleich wenigstens eine zweite Information zu wenigstens einem zweiten technischen Produkt zu geben, das in einem technischen Zusammenhang mit dem ersten technischen Produkt steht und aufgrund dieses technischen Zusammenhangs mit dem ersten technischen Produkt nach einem Arbeitsprozess ein für die kaufinteressierte Person optimales Arbeitsergebnis liefert. Dieses Informationssystem beeinflusst somit Bewegungsmuster auf der Verkaufsfläche und reduziert Kontakte mit anderen kaufinteressierten Personen und auch beratenden Personen.

Ein weiterer Vorteil der vorliegenden Erfindung ist, dass der virtuelle Assistent (VA) einen Chatbot umfasst, wobei die Steuereinrichtung den Chatbot in Abhängigkeit von der an der Schnittstelle eingegebenen ersten Information aktiviert und über den Chatbot ein digitales Dialogergebnis erzeugt, und die Steuereinrichtung die Anzeigeeinrichtung derart steuert, dass diese in Abhängigkeit von dem digitalen Dialogergebnis die zweite Information anzeigt. Dadurch ist es möglich, dass die für die kaufinteressierte Person in Abhängigkeit von der ersten Information bereitgestellte zweite Information zu optimieren.

Ein weiterer Vorteil der vorliegenden Erfindung ist, dass die zweite Information eine Mehrzahl voneinander unterschiedlicher digitaler Auskunftsdaten umfasst, wobei jedes digitale Auskunftsdatum einer text- und/oder bildbasierten Auskunft entspricht. Dadurch können der kaufinteressierten Person komplexe Informationen geliefert werden, die diese auf direktem Weg durch die Verkaufsfläche und hin zu wenigstens einem bestimmten zweiten technischen Produkt führen. Die kaufinteressierte Person kann aufgrund der ersten Information wenigstens ein weiteres technisches Produkt und wird ggf. auch auf direktem den Weg durch die Verkaufsfläche zu diesem geführt. Irrwege durch die Verkaufsfläche und die Suche nach beratenden Personen sowie dabei auftretende Kontakte können vermieden werden.

Ein weiterer Vorteil der vorliegenden Erfindung ist, dass die Schnittstelle eine optische Schnittstelle zum Einlesen eines 2D-Codes ist. Dadurch kann die kaufinteressierte Person mit ihrem eigenen mobilen Endgerät eine Verbindung zu dem virtuellen Assistenten bzw. dem Chatbot herstellen. Grundsätzlich kann dadurch ein auf der Verkaufsfläche bereitgestellter Desktop-Computer, ein auf der Verkaufsfläche bereitgestelltes mobiles Endgerät oder ein mobiles Endgerät der kaufinteressierten Person verendet werden. Der 2D-Code kann an wenigstens einer beliebigen Stelle, vorzugsweise aber an vielen Stellen der Verkaufsfläche, aber auch in Druckerzeugnissen und anderen Objekten außerhalb der Verkaufsfläche, unabhängig von dem bestimmten technischen Produkt angebracht sein. Die kaufinteressierte Person kann somit bereits außerhalb der Verkaufsfläche aber auch innerhalb der Verkaufsfläche eine Verbindung zu dem virtuellen Assistenten bzw. den Chatbot herstellen.

Eine Ausführungsform der vorliegenden Erfindung wird im Folgenden anhand der Zeichnung näher beschrieben. Es zeigen:
Fig. 1 ein schematischer Grundriss einer Verkaufsfläche gemäß vorliegender Erfindung;
Fig. 2 eine schematische Darstellung eines Informationssystems als mobiles Endgerät; und
Fig. 3 eine schematische Darstellung einer text- und/oder bildbasierten Auskunft.

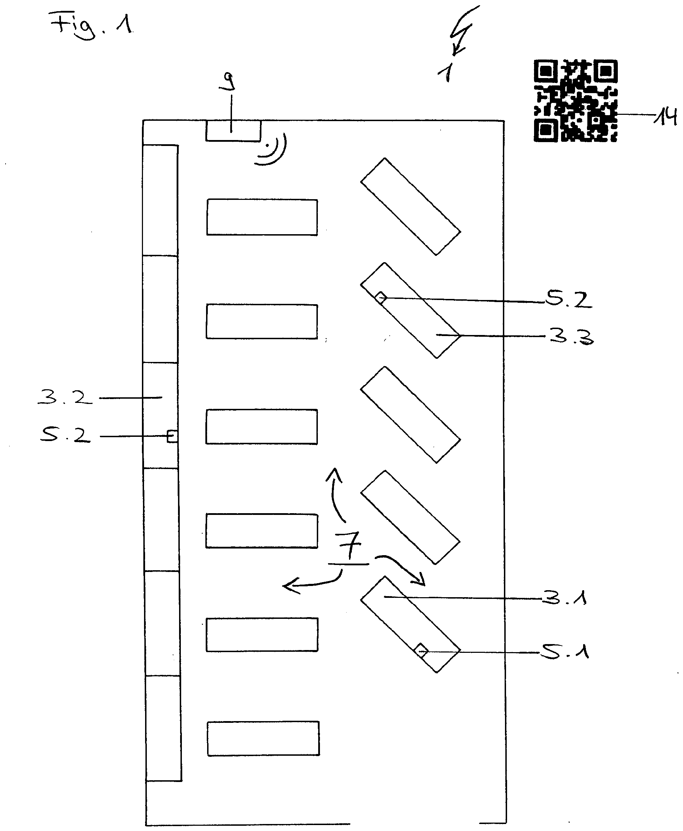

In Fig. 1 ist schematisch ein Grundriss einer Verkaufsfläche 1 gemäß vorliegender Erfindung dargestellt. Auf der Verkaufsfläche 1 sind in der vorliegenden Ausführungsform mehrere Präsentationseinrichtungen 3.1, 3.2, 3.3 zum Präsentieren eines technischen Produkts 5.1, 5.2, 5.3 oder einer Gruppe von technischen Produkten (im Folgenden technische Produktgruppe) angeordnet. Die Anzahl der Präsentationseinrichtungen 3.1, 3.2, 3.3 ist für die vorliegende Erfindung unerheblich. In anderen Ausführungsformen können daher mehr oder weniger Präsentationseinrichtungen 3.1, 3.2, 3.3 vorgesehen sein. Die Präsentationseinrichtungen 3.1, 3.2, 3.3 sind in Abstand zueinander angeordnet und begrenzen Wege 7, auf denen sich eine kaufinteressierte Person und auch eine beratende Person bewegen kann. Der ersten Präsentationseinrichtung 3.1 ist ein erstes technisches Produkt 5.1 oder eine erste technische Produktgruppe mit dem ersten technischen Produkt 5.1 zugeordnet. Der zweiten Präsentationseinrichtung 3.2 ist ein zweites technisches Produkt 5.2 oder eine zweite technische Produktgruppe mit dem zweiten technischen Produkt 5.2 zugeordnet. Der zweiten Präsentationseinrichtung 3.3 ist ein zweites technisches Produkt 5.3 oder eine zweite technische Produktgruppe mit dem zweiten technischen Produkt 5.3 zugeordnet.

Das erste technische Produkt 5.1 bzw. die erste technische Produktegruppe mit dem ersten technischen Produkt 5.1 unterscheidet sich von dem zweite technischen Produkt 5.2 bzw. der zweiten technischen Produktgruppe mit dem zweiten technischen Produkt 5.2. Ebenso unterscheidet sich das dritte technische Produkt 5.2 von dem ersten technischen Produkt 5.1 und dem zweiten technischen Produkt bzw. den jeweiligen Produktgruppen. Die erste, zweite und dritte Präsentationseinrichtung 3.1, 3.2, 3.3 präsentieren also jeweils ein unterschiedliches technisches Produkte 5.1, 5.2 bzw. 5.3. Das erste, zweite und dritte technische Produkt 5.1, 5.2, 5.3 müssen in einem technischen Arbeitsverfahren gemeinsam verwendet werden, um ein für eine kaufinteressierte Person ein optimiertes Arbeitsergebnis zu erzielen.

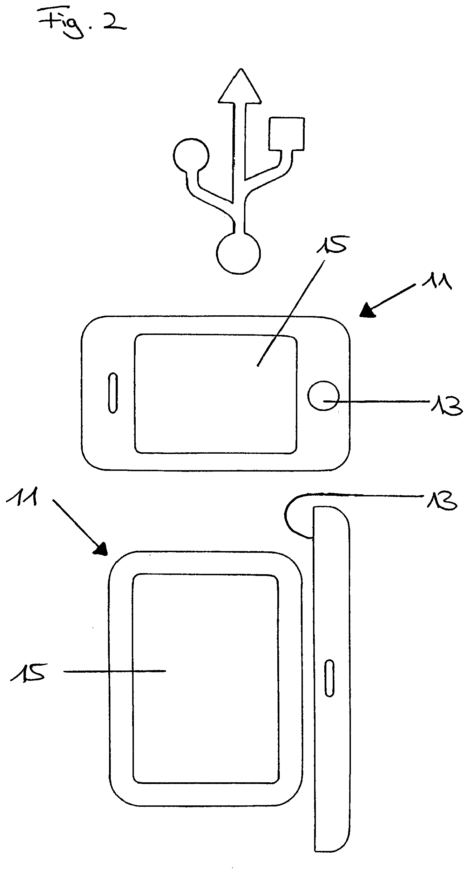

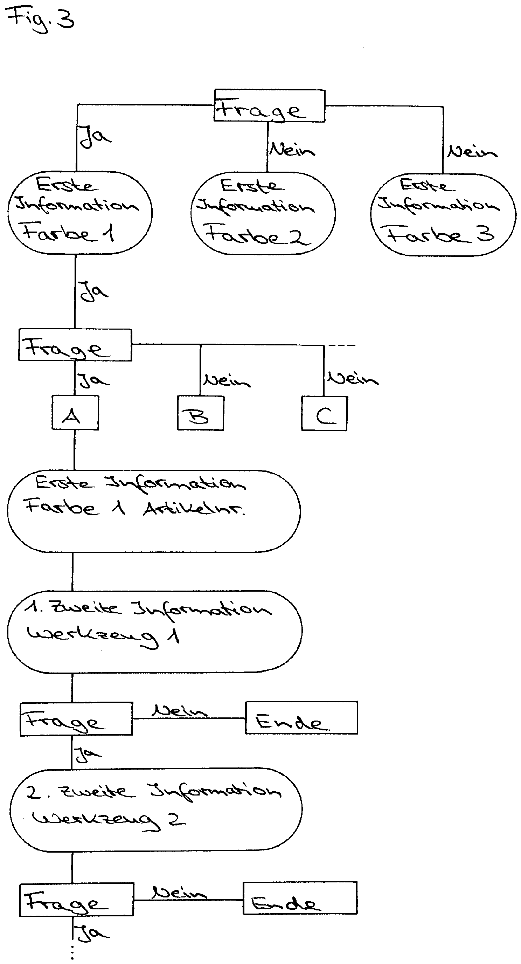

Auf der Verkaufsfläche 1 gibt es wenigstens ein Informationssystem 9, das eine erste Information zu dem von einer kaufinteressierten Person ausgewählten (bestimmten) technischen Produkt 5.1 aus der erste Gruppe vom technischen Produkten in der ersten Präsentationseinrichtung 3.1 zur Verfügung stellt. Das Informationssystem 9 kann ein auf der Verkaufsfläche 1 angeordneter Computer oder ein mobiles Endgerät umfassen, wie in Fig. 2 dargestellt, dass entweder auf der Verkaufsfläche 1 bereitgestellt wird oder ein persönliches mobiles Endgerät, z. B. Smartphone, der kaufinteressierten Person ist. Das Informationssystem 9 weist eine erste digitale Informationseinheit 9.1, z. B. ein mobiles Endgerät, mit einem virtuellen Assistenten (VA) auf und hat eine optische Schnittstelle 13 zum Einlesen eines 2D-Codes 14, wie z. B. eines QR-Codes, und eine digitale Anzeigeeinrichtung 15 zum Anzeigen einer text-und/oder bildbasierten Information. Das Informationssystem 9 umfasst auch eine Steuereinrichtung zum Steuern der digitalen Informationseinheit 11 und der digitalen Anzeigeeinrichtung 15. In Fig. 3 ist schematisch ein bild- und textbasierter Dialog des virtuellen Assistenten VA auf der digitalen Anzeigeneinrichtung 15 dargestellt.

An der zweiten und dritten Präsentationseinrichtung 3.2, 3.3 kann sich in anderen Ausführungsformen eine zweite digitale Informationseinheit 11 des Informationssystems 9 vorgesehen sein, wenn diese auf der Verkaufsfläche 1 bereitgestellt wird.

Die Verkaufsfläche 1 umfasst auch eine Computernetzwerk (nicht dargestellt) mit wenigstens einer Datenbank, in der alle erste, zweite und dritte Informationen zu einer Mehrzahl von technischen Produkten, die wenigstens auf der Verkaufsfläche 1 oder auch an anderen realen oder virtuellen Orten zu finden sind.

Wenn also eine kaufinteressierte Person an der ersten Präsentationseinrichtung 3.1 ein von ihre bestimmtes erstes technisches Produkt 5.1 auswählt und ein Kennzeichen dieses ausgewählten ersten technischen Produkts 5.1 über eine Schnittstelle 13 in das Informationssystem 9, z. B. in die digitale Informationseinheit 9.1 bzw. deren mobiles Endgerät eingibt, ruft die Steuereinrichtung des Informationssystems 9 einen diesem Kennzeichen entsprechenden Datensatz in der wenigstens einen Datenbank auf und stellt diesen auf der Anzeigeeinrichtung 15 der digitalen Informationseinheit 9.1 als text-und/oder bildbasierte Information dar. Die kaufinteressierte Person erhält so, z. B. auf ihrem als digitale Informationseinheit 9.1 genutztes Smartphone, eine erste Information zu einem von ihr ausgewählten bzw. bestimmten ersten technischen Produkt 5.1.

In der wenigstens einen Datenbank ist somit die einem ersten technischen Produkt 5.1 zugeordnete erste Information in Form eines ersten digitalen Datensatzes gespeichert. Zusätzlich ist in der wenigstens einen Datenbank aber auch wenigstens eine einem zweiten technischen Produkt 5.2 zugeordnete und von der ersten Information unterschiedliche zweite Information in Form eines zweiten digitalen Datensatzes gespeichert. Der erste digitale Datensatz ist mit dem wenigstens einen zweiten digitalen Datensatz verknüpft.

Bei der Eingabe des Kennzeichens des von der kaufinteressierten Person in das Informationssystem 9 ruft die Steuereinrichtung des Informationssystems 9 nicht nur den diesem Kennzeichen entsprechenden ersten digitalen Datensatz in der wenigstens einen Datenbank auf, sondern auch wenigstens einen zweiten digitalen Datensatz, der wenigstens einer zweiten Information zu wenigstens einem zweiten technischen Produkt 5.2 zugeordnet ist, und stellt diesen auf der entsprechenden Anzeigeeinrichtung 15 als weitere text- und/oder bildbasierte Information dar. Die kaufinteressierte Person erhält so neben der erste Information zu einem von ihr ausgewählten bzw. bestimmten ersten technischen Produkt 5.1 wenigstens eine zweite Information zu wenigstens einem mit dem ersten technischen Produkt 5.1 zusammenwirkenden zweiten technischen Produkt 5.2, deren Kombination in einem Arbeitsprozess zu einem für die kaufinteressierte Person optimierten Arbeitsergebnis führt.

Die dem ersten und wenigstens einen zweiten digitalen Datensatz entsprechende erste und wenigstens eine zweite Information umfasst auch einen Hinweis über die Zuordnung des wenigstens einen zweiten technischen Produkts 5.2 zu der ersten oder zweiten Präsentationseinrichtung 3.2 und/oder 3.3. Die kaufinteressierte Person kann dann mit der jeweils zur Verfügung gestellten wenigsten einen zweiten Information auf direktem Weg über ein Wegeleitsystem zu der betreffenden Präsentationseinrichtung 3.2 und/oder 3.3 geführt werden.

In der vorliegenden und bevorzugten Ausführungsform umfasst der virtuelle Assistent (VA) einen Chatbot, wobei die Steuereinrichtung den Chatbot in Abhängigkeit von dem an der Schnittstelle eingelesenen Kennzeichen aktiviert und über den Chatbot einen digitalen Dialog mit der kaufinteressierten Person erzeugen kann, und diesen zu einem Dialogergebnis führt. Die Steuereinrichtung steuert die Anzeigeeinrichtung 15 derart, dass diese in Abhängigkeit von dem digitalen Dialogergebnis die wenigsten eine zweite Information anzeigt. Die wenigsten eine zweite Information umfasst eine Mehrzahl voneinander unterschiedlicher digitaler Auskunftsdaten, wobei jedes digitale Auskunftsdatum einer text- und/oder bildbasierten Auskunft entspricht. Auf diese Weise ist ein zu einem Dialogergebnis geführter Dialog mit dem Chatbot möglich.

Grundsätzlich können als Schnittstellen 13 alle denkbaren Schnittstellen 13 eingesetzt werden. In einer einfachen Ausführungsform erfolgt die Eingabe eines Kennzeichens zu einem von der kaufinteressierten Person bestimmten ersten technischen Produkt 5.1 über eine Tastatur oder einen Touchscreen. In der vorliegenden Ausführungsform ist die Schnittstelle 13 eine optische Schnittstelle 13, z. B. eine in eine digitale Informationseinheit 9.1 integrierte Kamera, zum Einlesen eines 2D-Codes 14, z. B. QR-Codes. In anderen Ausführungsformen kann auch alternativ oder ergänzend eine akustische Schnittstelle verwendet werden. Das Informationssystem gemäß vorliegender Erfindung kann mehrere der vorgenannten technischen Schnittstellen in Kombination aufweisen. Der von der digitalen Informationseinheit 9.1 auf der Verkaufsfläche 1 einzulesende bzw. einzuscannende 2D-Code befindet sich an beliebigen Stellen auf der Verkaufsfläche 1 und an Objekten, die sich auf dem Weg 7 durch die Verkaufsfläche 1 befinden.

In einem Anwendungsbeispiel hat eine kaufinteressierte Person vor, eine Wand mit einer Farbe zu streichen. Aus diesem Grund betritt die kaufinteressierte Person die Verkaufsfläche eines Baumarkts und begibt sich über das Wegeleitsystem zu einer Präsentationseinrichtung, in der das technische Produkt "Farbe" präsentiert wird. Die kaufinteressierte Person sucht sich eine Farbe aus, ist sich aber nicht sicher, ob sie zur Durchführung des Arbeitsprozesses noch andere technische Produkte benötigt oder sie weiß, dass sie andere technische Produkte benötigt, ist sich aber nicht sicher, welche Eigenschaften diese haben müssen, um mit der von ihr ausgewählten Farbe zu einem optimierten Arbeitsergebnis zu führen. Daher scannt die kaufinteressierte Person einen von ihr auf ihrem Weg 7 durch die Verkaufsfläche 1 gefundenen QR-Code 14 mit ihrem Smartphone. Dadurch wird eine Verbindung zu dem Informationssystem 9 hergestellt, so dass das Smartphone zu der digitalen Informationseinheit 9.1 und somit zu einem Teil des Informationssystems 9 wird. Mit dem Einscannen aktiviert die kaufinteressierte Person einen softwarebasierten Chatbot, der mit der kaufinteressierten Person auf ihrem Smartphone einen Dialog führt. Der Chatbot führt den Dialog zu einem Dialogergebnis. Das Dialogergebnis wird auf der Anzeigeeinrichtung 15 des Smartphones der kaufinteressierten Person angezeigt und umfasst wenigstens ein weiteres (zweites) technisches Produkt 5.2 und dessen Präsentationsort in wenigstens einer zweiten oder dritten Präsentationseinrichtung 3.2, 3.3 sowie den Weg dorthin. Die kaufinteressierte Person kann die Darstellung des wenigstens einen weiteren technischen Produkts fotografieren und sich dann auf den direkten Weg zu der vom Chatbot angegebenen Präsentationseinrichtung 3.2, 3,3 begeben.

Dadurch werden Umwege und weitere Kontakte mit anderen kaufinteressierten Personen und/oder beratenden Personen auf der Verkaufsfläche vermieden. Die kaufinteressierte Person erhält in einem automatisierten Vorgang alle technischen Produkte, die in diesem Anwendungsfall für das Streichen der Wand mit der ausgewählten Farbe erforderlich sind, z. B. Vorstreichfarbe, Pinsel, Spachtel, Spachtelmasse etc. Diese weiteren technischen Produkte unterscheiden sich z. B. in Abhängigkeit von dem Material der Wand, der Beschaffenheit der Wand und der Art der Farbe.

### Bezugszeichenliste

- 1: Verkaufsfläche
- 3.1: erste Präsentationseinrichtung
- 3.2: zweite Präsentationseinrichtung
- 3.3: dritte Präsentationseinrichtung
- 5.1: erstes technisches Produkt
- 5.2: zweites technisches Produkt
- 7: Weg
- 9: Informationssystem
- 11: digitale Informationseinheit
- 13: Schnittstelle
- 14: 2D-Code/QR-Code
- 15: digitale Anzeigeeinrichtung
- VA: virtueller Assistent

## Patentansprüche

1. Verkaufsfläche (1) mit einer Mehrzahl von Präsentationseinrichtungen (3.1; 3.2; 3.3) zum Präsentieren wenigstens eines zweiten technischen Produkts (5.2), mit einem Wegeleitsystem zum Leiten von kaufinteressierten Personen zu einer der Präsentationseinrichtungen (3.1; 3.2; 3.3), mit einem Informationssystem (9), das den kaufinteressierten Personen eine erste Information zu wenigstens einem ersten technischen Produkt (5.1) liefert, wobei das Informationssystem (9.1) wenigstens eine digitale Informationseinheit (11) mit einem virtuellen Assistenten (VA) umfasst, der eine Schnittstelle (13) zur Eingabe eines Kennzeichens des ersten technischen Produkts (5.1) und eine Anzeigeeinrichtung (15) zum Anzeigen einer text- und/oder bildbasierten Information aufweist, und mit einer Steuereinrichtung zum Steuern des Informationssystems(9),
**dadurch gekennzeichnet,**
**dass** der virtuelle Assistent (VA) mittels der Steuereinrichtung auf eine Datenbank zugreifen kann, in der die erste Information in Form eines ersten digitalen Datensatzes und wenigstens eine einem zweiten technischen Produkt (5.2) zugeordnete und von der ersten Information unterschiedliche zweite Information in Form eines zweiten digitalen Datensatzes gespeichert sind, wobei der erste digitale Datensätze mit dem wenigstens einen zweiten digitalen Datensatz verknüpft ist und die Steuereinrichtung in Abhängigkeit von der an der Schnittstelle (13) eingelesenen ersten Information die wenigstens eine zweite Information an der Anzeigeeinrichtung (15) anzeigt.

2. Verkaufsfläche nach Anspruch 1,
**dadurch gekennzeichnet,**
**dass** der virtuelle Assistent (VA) einen Chatbot umfasst, wobei die Steuereinrichtung den Chatbot in Abhängigkeit von der an der Schnittstelle (13) eingelesenen ersten Information aktiviert und über den Chatbot ein digitales Dialogergebnis erzeugt, und die Steuereinrichtung die Anzeigeeinrichtung (15) derart steuert, dass diese in Abhängigkeit von dem digitalen Dialogergebnis die wenigstens eine zweite Information anzeigt.

3. Verkaufsfläche nach Anspruch 2,
**dadurch gekennzeichnet,**
**dass** die wenigsten eine zweite Information eine Mehrzahl voneinander unterschiedlicher digitaler Auskunftsdaten umfasst, wobei jedes digitale Auskunftsdatum einer text-und/oder bildbasierten Auskunft entspricht.

4. Verkaufsfläche nach Anspruch 2 oder 3,
**dadurch gekennzeichnet,**
**dass** die Schnittstelle (13) eine optische Schnitts3telle (13) zum Einlesen eines 2D-Codes (14) ist.

5. Verkaufsfläche nach einem der vorstehenden Ansprüche,
**dadurch gekennzeichnet,**
**dass** das wenigstens eine erste technische Produkt (5.1) in wenigstens einer ersten Präsentationseinrichtung (3.1) präsentiert wird.

6. Mobile Informationseinheit mit der Anzeigeeinrichtung (15), die in das Informationssystem (9) der Verkaufsfläche (1) nach einem der Ansprüche 1 bis 5 integriert ist.

7. Chatbot, der in das Informationssystem (9) der Verkaufsfläche (1) nach einem der Ansprüche 1 bis 5 integriert ist.
